# EUROPEAN PATENT SPECIFICATION

(11) **EP 3 281 555 B1**
(45) Date of publication and mention of the grant of the patent: **15.05.2019**
(21) Application number: 17185311.2
(22) Date of filing: 08.08.2017
(51) Int. Cl.: A47B 96/06, F16B 12/22, A47B 57/22, A47B 47/04, F16B 5/06

(54) **CONCEALABLE JOINING SYSTEM FOR PANELS OF A PIECE OF FURNITURE OR THE LIKE**
VERSTECKBARES VERBINDUNGSSYSTEM FÜR PANEELE EINES MÖBELSTÜCKS ODER DERGLEICHEN
SYSTÈME D'ASSEMBLAGE DISSIMULABLE POUR PANNEAUX D'UN MEUBLE OU SIMILAIRE

(30) Priority: 11.08.2016 IT 201600084620
(43) Date of publication of application: 14.02.2018
(73) Proprietor: O.M.M. Srl dell'Ing. Roberto Natale Mariani, 20832 Desio (MB) (IT)
(72) Inventor: MARIANI, Roberto Natale, 20832 Desio (MB) (IT)
(74) Representative: Colombo, Stefano Paolo

(56) References cited:
- EP-A1- 2 609 833
- WO-A1-2010/034467
- WO-A1-2013/164753
- WO-A1-2015/158622
- WO-A1-2016/180933

## Description

### BACKGROUND

The present invention relates to a concealable joining system for fastening together two panels of a piece of furniture or the like. The present invention also relates to a piece of furniture comprising a concealable joining system.

### STATE OF THE ART

As is known, a piece of furniture (or "furniture unit") typically comprises two vertical panels (commonly called "flanks" or "shoulders"), a horizontal bottom panel (commonly called "base") and a top panel which is also horizontal (commonly called "lid"). Furthermore, the furniture unit may comprise a number of horizontal intermediate panels, otherwise known as "shelves".

During assembly of the furniture unit, the shoulders are typically fastened together with the bottom panel of the furniture unit and with the top panel. Moreover, the intermediate panels are usually fastened to the shoulders of the furniture unit so as to form shelves and/or in order to reinforce the furniture unit.

In particular, a shelf of a furniture unit may be a shelf with a single visible edge (also called "single-face" or "blind" shelf) or a shelf with double visible edge (also called "double-face" shelf). In the first case it consists of a shelf where, when the furniture unit is assembled, only the front edge is visible and the rear edge usually rests against a panel or a rear wall of the furniture unit. In the second case instead it consists of a shelf which, when the furniture unit is assembled, may have visible both the front edge and the rear edge.

Joining devices are known. For example WO 2010/034467 describes a system for inserting and fixing a shelf for frontal insertion in a modular furniture unit - comprising at least two side walls, a plurality of shelves and means for connection to the side walls and for supporting the shelves - comprising a first support and a second support designed to be inserted inside a longitudinal milled opening formed in a side wall of the shelf without projecting from said milled opening and fixed there, and at least two pins fixed to a side wall of the furniture unit and designed to be inserted in the supports. The first support is located at the end of the milled opening adjacent to the edge of the shelf which is visible when the shelf is inserted between the side walls and the second support is located at the other end of the milled opening or close to this end,

The inventor has noticed that the supports known from WO 2010/034467 ensure only vertical stability of a central shelf and the side walls of the furniture unit. In other words, the supports known from WO 2010/034467 do not provide any pulling action between the shelf and the side walls. Namely, the known supports do not pull the edges of the shelf towards the side walls. This disadvantageously has the effect that the position of the shelf is not perfectly fixed between the two side walls of the furniture unit, but that instead the shelf may have a degree of play in the horizontal direction between the side walls. The supports known from WO 2010/034467, moreover, may not be used to connect the side walls to the top or bottom surfaces since they do not ensure the necessary stability of the structure.

Another joining device is known from Italian patent IT 1,411,456. The joining device known from IT 1,411,456 is designed to fasten together a first panel and a second panel of a furniture unit or the like, the joining device being configured to be associated with the first panel and comprising a main body and a spring, wherein the spring is fastened to the main body and is at least partially deformable elastically as a result of the cooperation with a fixing member fixed to the second panel so as to draw elastically the first panel towards the second panel.

The device known from IT 1,411,456 is very efficient since it is able to pull elastically a horizontal panel towards a vertical panel. The furniture unit thus assembled is very solid and stable. However, the proposed aim of the inventor is to improve the known joining device so that it is entirely invisible once the furniture unit has been assembled.

WO 2013/164753 A1 discloses a shelf. A blocking element is inserted into a long milled channel 6. The channel 6 has two ends (second portions 602) having a curved profile. A metal plate can be present at the second portions 602 of the channel 6 to facilitate the removal of the pin from the channel. The inventor has noticed that the long milled channel renders the edge of the shelf weak. Milling the channel is also an additional work which results in an additional cost. In addition, because the material of the shelf is generally chipboard (a wood product manufactured from wood chips) or the like, the bottom of the channel 6 can not offer a reliable means for compressing the pin and for removing the shelf. This last problem can be solved by providing a metal plate but this adds costs and results in longer times. It also increases weight of the shelf and renders the recycling operations more complicated.

EP 2 609 833 A1 discloses a device for assembly /joining parts of modular furniture and furnishing accessories.

WO 2016/180933 A1 discloses a retaining device for a shelf base on a shelf wall and shelf comprising such a retaining device.

### SUMMARY OF THE INVENTION

The inventor has in fact noted that the known joining device requires small milled openings formed on the edges of the horizontal panels. These small milled openings must allow the heads of the projecting pins fixed to the flanks to pass through when the horizontal panel is lowered to cause the engagement between the pin and the joining device. The small milled openings, not matter how small, may be visible when looking at the side (usually the bottom side) of the horizontal panel.

Therefore the object of the present invention is to provide a system for joining together two panels of a furniture unit or the like which is entirely invisible when the panels are joined together and which provides an elastic force for pulling one panel towards the other one.

The joining system according to the invention comprises a pin and a joining device. For easier illustration, below in the present description and in the claims, the joining device will also be referred to simply as "device". Moreover, below in the present description, by way of a non-limiting example, reference will be made to a joining device able to fasten a horizontal panel (shelf) to the shoulders of a furniture unit.

According to a first aspect of the invention, a joining system is provided for fastening together a shelf and an upright of a piece of furniture or the like, the joining system comprising a joining device configured so as to be recessed into the edge of the shelf and a pin fixed to the upright, wherein said pin comprises a cylinder configured so as to be inserted into a hole of the upright and a head flexibly protruding from said cylinder; wherein said joining device comprises a main body at least partially deformable when in engagement with the head of the pin so as to flexibly draw together the shelf and the upright; wherein said joining device comprises a chute configured so as to cooperate with the head of the pin when the shelf must be unhooked from the upright. Preferably, the main body has two pivots projecting from the base of the main body. The pivots are configured for penetrating into the edge of the sheld. The joining device is configured to be recessed precisely into a milled opening having a shape as the shape of the joining device. In this way, the shelf maintains its rigidity or even increases rigidity. The chute is provided directly into the joining device and it does not become negatively affected in case the shelf is disassembled more than once.

The chute preferably comprises an inclined surface located at one end of the main body.

The inclined surface preferably is inclined at an angle of between 45° and 60° with respect to the bottom surface of said main body.

The joining device is made of two pieces, wherein a second piece comprises two pivots, an engaging surface and a notch and wherein a first piece comprises said chute.

The second piece preferably comprises a tab and the first piece comprises a slit for said tab.

The pin preferably comprises a spring configured so as to push the head of the pin outside the cylinder.

The spring is preferably a conical spring.

The cylinder preferably comprises a thread on a lateral surface thereof and a front part of the pin comprises notches for the head of a screwdriver.

According to a second aspect, the present invention provides a piece of furniture comprising a shelf and an upright, and further comprising a joining system as set forth above for connecting together the shelf and the upright.

### BRIEF DESCRIPTION OF DRAWINGS

The present invention will become clearer from the following detailed description, provided by way of a non-limiting example, to be read with reference to the accompanying drawings, in which:
- Figures 1 and 2 are two axonometric views of the joining device of the system according to an embodiment of the invention;
- Figure 3 is a side view of the device according to Figures 1 and 2;
- Figure 4 is a front-end view of the device according to Figures 1 and 2;
- Figure 4A is a cross-section along the line A-A of Figure 4.
- Figure 5 is a plan view of the device according to Figures 1 and 2;
- Figure 5B is cross-sectional view along the line B-B of Figure 5.
- Figure 6 is an axonometric view of the pin of the system according to an embodiment of the invention;
- Figure 7 is a side view of the pin according to Figure 6;
- Figure 7C is cross-section along the line C-C of Figure 7.
- Figure 8 is a front-end view of the pin;
- Figures 9a, 9b, 10a and 10b are views which show the steps for assembly of a horizontal panel (shelf) together with a vertical panel (shoulder or upright).

### DESCRIPTION OF EXAMPLES

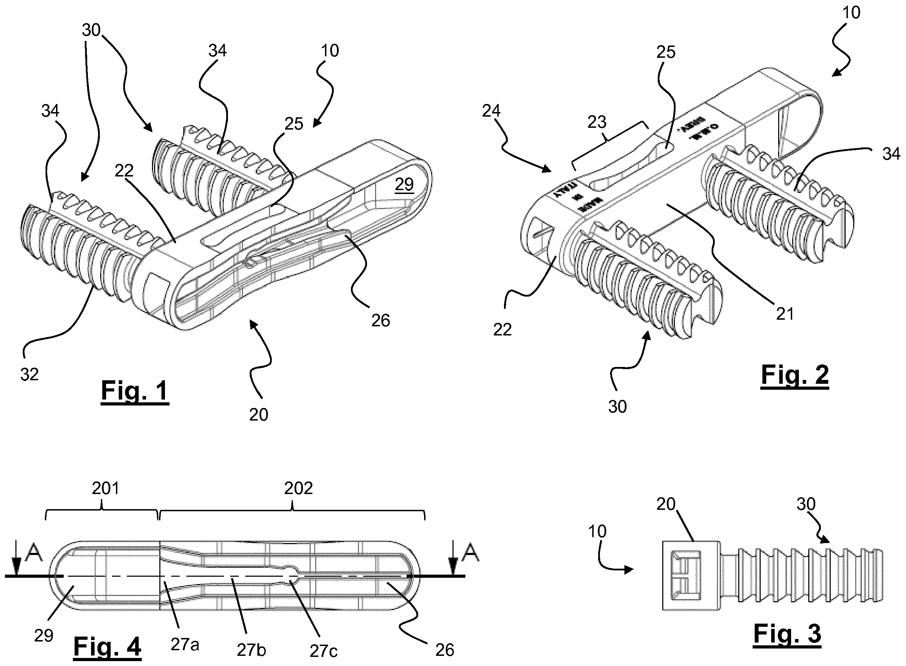

Figures 1 and 2 show a joining device 10 of a joining system 100 according to an embodiment of the present invention. The joining system comprises, in addition to the joining device 10, a pin 50.

The purpose of the joining system according to the invention is to fasten together two panels in a reversible and substantially invisible manner. In the present description the two panels will be called "first panel and second panel" or "horizontal panel and vertical panel". For the sake of simplicity, the two panels will also be called "shelf and upright", this definition being intended to include any panel arranged substantially horizontal and any panel arranged substantially vertical.

The joining device 10 comprises a main body 20 and two pivots 30 projecting from the base of the main body 20. Preferably, each pivot 30 is a substantially cylindrical body having a circular section. Preferably, each pivot 30 comprises a plurality of ribs 32 for preventing the pivots from coming out the respective holes. Preferably, as shown in Figures 1 and 2, each pivot 30 has a pair of radially opposite longitudinal incisions 34.

The main body 20 has preferably a substantially rectangular elongated form in plan view, but with the two short sides formed by two semi-circles. The main body is substantially hollow with a flat closed base 21 (Figure 2) and a side wall 22 along the entire perimeter.

Preferably, the main body 20 is made at least partially of synthetic polymers, based on aliphatic or semi-aromatic polyamides. According to preferred embodiments, the main body is made of Nylon or any other similar thermoplastic silky material that can be melt-processed into the appropriate shape.

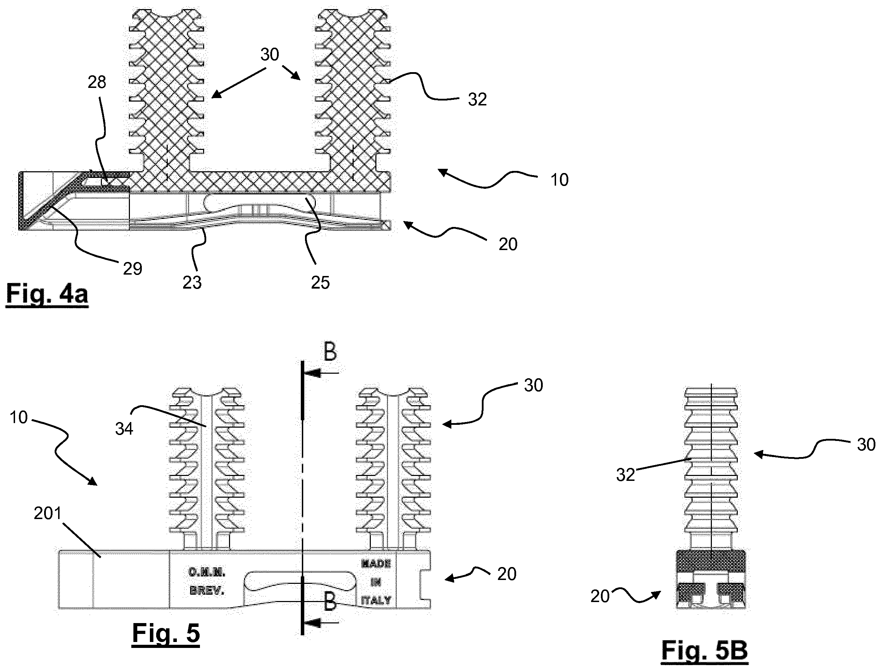

Preferably, the edge 23 of the perimetral side wall 22 does not lie entirely in a single plane, as can be seen in particular in Figures 4a and 5. In the central part (substantially between the two pivots 30) the edge 23 is recessed with respect to the plane in which the rest of the edge 23 of the side wall lies. Expressed in other words, the height (measured from the closed base 21) of the side wall 22 of the main body 20 is smaller in the zone between the two pivots 30 than the height of the side wall 22 in the end parts. The edge 23 of the side wall 22 therefore forms a kind of arched profile 24.

The perimetral side wall 22, along the arched edges, comprises two respective elongated eyelets 25. The eyelets 25 are visible, for example, in Figures 1, 2, 4a, 5 and 5b.

Preferably a first part 201 (the right-hand part in Figures 1 and 2) of the main body 20 is substantially completely open. The end of the first open part comprises an inclined surface 29 which will be described more fully below.

Preferably, the main body comprises an engaging wall 25 configured to engage the head of a pin (which will be described below). The engaging wall 26 extends substantially so as to close the main body 20, except along the aforementioned first substantially open part 201. The engaging wall 26 comprises a notch 27 which extends along the longitudinal axis of the main body 20. The notch 27 is preferably open towards the aforementioned substantially open first part 201. Preferably, the notch 27 terminates at a point 27c between the two pivots 30. This point 27c preferably corresponds to the section where the perimetral side wall 22 is lower and also to the section halfway along the eyelets 25.

Preferably, the engaging wall 26 follows the edge of the side wall 22 and forms a depression where the side wall 22 follows the arched profile 24. Preferably, the engaging wall 26 is slightly recessed with respect to the edge 23 of the side wall 22.

The notch 27 has preferably the shape shown in Figure 4. The mouth 27a of the notch is open in a V shape. In the central part 27b the notch has a substantially constant width. The notch, at its end 27c, has preferably the shape of a circle and forms the end-of-travel and stop position for the pin 50, as will become clear below. Preferably, according to an embodiment of the invention, the notch 27 has a length of about 4-10 mm.

According to the invention, the main body 20 is formed as two pieces which can be joined together to form a single body as shown in Figure 1 or Figure 2. The second piece 202 is that which comprises the two pivots 30, the engaging wall 26 and the notch 27. The first piece 201 is that without engaging wall 26 and therefore substantially open. According to the embodiment shown in the various figures, one of the two pieces 201, 202 comprises a rigid tab on the bottom which is configured to engage inside a slit 28 formed in the bottom of the other of the two pieces.

Advantageously, the first piece 201 comprises an inclined wall 29, otherwise called "chute", the function of which will be described in detail below. In any case, the main function of the chute 29 is to compress the pin 50, or rather its head, and therefore facilitate extraction of the shelf.

The chute 29 is shown in Figure 1, but in particular in the cross-section of Figure 4a. Preferably, the chute 29 is inclined at an angle of between about 40° and about 55°. Preferably, it is inclined at about 45° with respect to the bottom 21 of the main body 20.

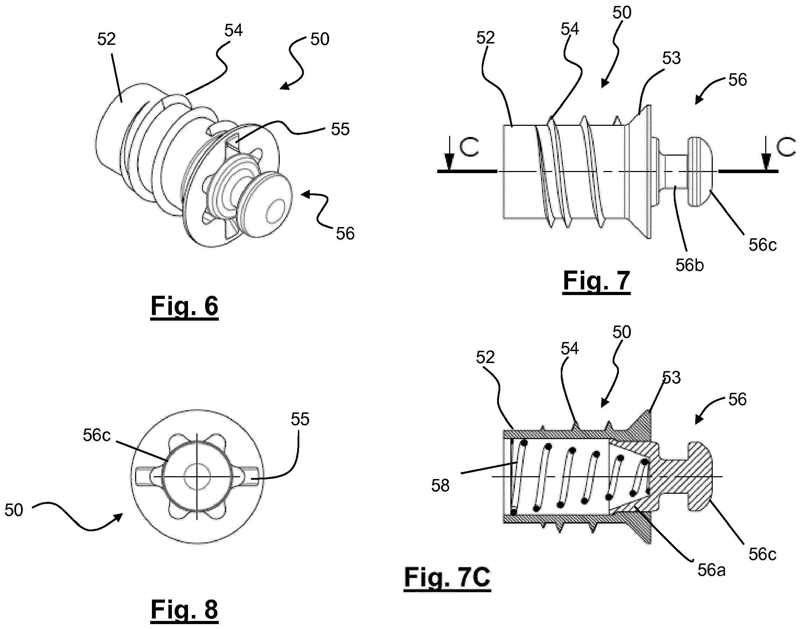

The pin 50 of the joining system will be described hereinbelow with reference to Figures 6, 7, 7c and 8.

The pin 50 comprises an external cylinder 52, a head 56 and a spring 58. The external cylinder 52 is open at a first end thereof so as to allow the head 56 of the pin to protrude flexibly with respect to the length of the cylinder 52. The external cylinder 52 preferably has an outer wall provided with a thread 54 so as to be able to be screwed inside a hole V1 of a vertical panel V (upright or the like). Preferably, the cylinder 52 has a section with a relatively thin wall, but has a frustoconical form at its first end 53 (Figures 7 and 7c). In this way a front-end surface in the form of a circular rim is formed. Preferably, notches 55 are provided on the circular rim (Figure 8) for the head of a screwdriver or other similar tool.

The spring 58 is housed inside the cylinder 52. Preferably, the spring 58 is a conical spring with turns having a smaller diameter towards the open end of the cylinder (Figure 7c).

The head 56 is shaped so as to have at least one part 56a configured to slide inside the cylinder 52, in engagement with the spring 58, a narrow neck 56b and a wider part 56c. The various Figures 6, 7, 7c and 8 show the pin 50 in the configuration where the narrow neck 56b and the widened part 56c project from the cylinder 52 and are kept in this position by the spring 58. In another configuration, the head 56 may be pressed so to act against the spring 58 until its retracts completely inside the cylinder 52. This configuration allows the pin 50 to be screwed inside a corresponding hole V1 of the vertical panel V (flank or shoulder) of a furniture unit. Moreover, it allows a horizontal panel (shelf) H of a furniture unit to be moved with respect to the vertical panel V so as to fix them stably or separate them.

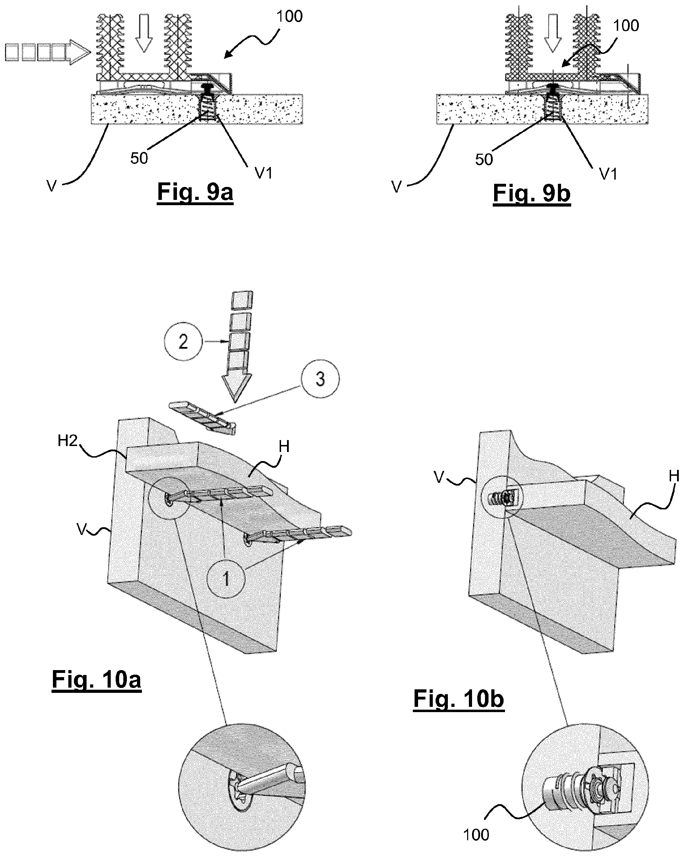

With reference to Figures 9a, 9b, 10a and 10b, a description is now provided as to how to fasten a horizontal panel H to a vertical panel V of a furniture unit, using the joining system 100 of the present invention.

Figures 9a and 9b show the pin 50 already screwed inside a hole V1 of the vertical panel V. For greater clarity, the horizontal panel is not shown, but only the joining device 10 is shown. The head 56 of the pin 50 is pressed so that it retracts inside the cylinder 52. For as long as the pin 50 slides against the edge H2 of the thickness of the shelf H, the head 56 of the pin 50 remains inside the cylinder 52 and does not protrude. Once the pin 50 encounters the open part 201 of the main body 20 of the joining device 10, the head 56 of the pin 50 moves out gently sliding along the chute 29 (Figure 9a). When the shelf H is displaced further, the head 56 of the pin 50 engages the mouth 27a of the notch 27, which is open in the form of a V, and then the central part 27b of the notch until it reaches the end-of-travel point 27c which forms the stop position for the pin 50. In this position the engagement between the pin 50 and the joining device 10 elastically pulls the edge H2 of the shelf H towards the vertical panel V. A kind of leaf spring effect is created owing to the arched form of the joining device 10 which is engaged by the head 56 of the pin 50.

Figures 10a and 10b illustrate in schematic form the movements to be performed in order to fasten a shelf H to a flank V. In a first step (arrows 1) the heads 56 of the pins 50 are pushed and retracted inside the cylinders 52. In a second step (arrows 2) the shelf H is pushed downwards, still keeping the heads 56 of the pins 50 inside the cylinders 52 and not protruding. In a third step (arrow 3) the shelf H is displaced so as assume the configuration shown in Figure 9a and then that shown in Figure 9b.

Advantageously, the system 100 according to the invention is invisible, i.e. the shelf H does not have visible holes: the two sides of the shelf H do not have holes or openings. Preferably, each single joining device 10 is housed inside a suitably shaped milled opening, but a continuous milled opening between two joining devices of a same shelf is not necessary.

Advantageously, the shelf H may be disassembled by sliding it in the opposite direction to the direction of assembly: i.e. from the initial configuration shown in Figure 9b, the shelf H may be slid so as to bring it into the configuration shown in Figure 9a. A further sliding movement cause the head 56 of the pin 50 to slide along the chute 29 and move back gently inside the cylinder against the resilient force of the spring 58. Once the head of the pin is completely retracted, the shelf H is free to be separated from the flanks V.

## Claims

1. A joining system (100) for fastening together a shelf (H) and an upright (V) of a piece of furniture or the like, the joining system (100) comprising a joining device (10) configured so as to be recessed into the edge (H2) of the shelf (H) and a pin (50) fixed to the upright (V),
wherein said pin (50) comprises a cylinder (52) configured so as to be inserted into a hole (V1) of the upright (V) and a head (56) flexibly protruding from said cylinder (52);
wherein said joining device (10) comprises a main body (20) at least partially deformable when in engagement with the head (56) of the pin (50) so as to flexibly draw together the shelf (H) and the upright (V);
wherein the main body (20) has two pivots (30) projecting from the base of the main body (20),
wherein said main body (20) comprises a chute (29) configured so as to cooperate with the head (56) of the pin (50) when the shelf (H) must be unhooked from the upright (V),
**characterized in that** said joining device (10) is made of two pieces which can be joined together to form a single body, wherein a first piece (201) comprises said chute (29) and wherein a second piece (202) comprises said two pivots (30), an engaging surface (26) and a notch (27).

2. The joining system (100) according to claim 1, wherein said chute (29) comprises an inclined surface located at one end (201) of the main body (20).

3. The joining system (100) according to claim 2, wherein said inclined surface (29) is inclined at an angle of between 45° and 60° with respect to the bottom surface (21) of said main body (20).

4. The joining system (100) according to claim 1, wherein said second piece (202) comprises a tab and said first piece (201) comprises a slit (28) for said tab.

5. The joining system (100) according to any one of the preceding claims, wherein said pivot (50) comprises a spring (58) configured so as to push the head (56) of the pivot (50) outside the cylinder (52).

6. The joining system (100) according to claim 5, wherein said spring (58) is a conical spring.

7. The joining system (100) according to any one of the preceding claims, wherein the cylinder (52) comprises a thread (54) on a lateral surface thereof and a front part of the pivot comprises notches (55) for the head of a screwdriver.

8. A piece of furniture comprising a shelf (H) and an upright (V), and further comprising a joining system (100) according to any of the preceding claims for connecting together said shelf (H) and said upright (V).

## Patentansprüche

1. Verbindungssystem (100) zum Verbinden eines Bretts (H) mit einer Stütze (V) eines Möbelstücks oder dergleichen, wobei das Verbindungssystem (100) eine Verbindungseinrichtung (10), welche so konfiguriert ist, um in den Rand (H2) des Bretts (H) eingebaut zu werden, und einen Bolzen (50), welcher an der Stütze (V) befestigt ist, aufweist,
wobei der Bolzen (50) einen Zylinder (52), welcher konfiguriert ist, um in ein Loch (V1) in der Stütze (V) eingesetzt zu werden, und einen flexibel von dem Zylinder (52) abstehenden Kopf (56) aufweist;
wobei die Verbindungseinrichtung (10) einen Hauptkörper (20) aufweist, welcher zumindest teilweise verformbar ist, wenn er sich in Eingriff mit dem Kopf (56) des Bolzens (50) befindet, um das Brett (H) und die Stütze (V) flexibel zusammenzuziehen;
wobei der Hauptkörper (20) zwei Zapfen (30) aufweist, welche über der Basis des Hauptkörpers (20) auskragen,
wobei der Hauptkörper (20) eine Schräge (29) aufweist, welche konfiguriert ist, um mit dem Kopf (56) des Bolzens (50) zusammenzuwirken, wenn das Brett (H) aus der Stütze (V) ausgehängt werden muss,
**dadurch gekennzeichnet, dass** die Verbindungseinrichtung (10) aus zwei Teilen gefertigt ist, welche zusammengefügt werden können, um einen einzigen Körper zu bilden, wobei ein erster Teil (201) die Schräge (29) aufweist und wobei ein zweiter Teil (202) die zwei Bolzen (30), eine Eingriffsoberfläche (26) und eine Nut (27) aufweist.

2. Verbindungssystem (100) nach Anspruch 1, wobei die Schräge (29) eine geneigte Oberfläche aufweist, welche sich an einem Ende (201) des Hauptkörpers (20) befindet.

3. Verbindungssystem (100) nach Anspruch 2, wobei die geneigte Oberfläche (29) um einen Winkel zwischen 45° und 60° bezüglich der Unterseite (21) des Hauptkörpers (20) geneigt ist.

4. Verbindungssystem (100) nach Anspruch 1, wobei der zweite Teil (202) eine Lasche und der erste Teil (201) einen Schlitz (28) für die Lasche aufweist.

5. Verbindungssystem (100) nach einem der vorhergehenden Ansprüche, wobei der Bolzen (50) eine Feder (58) aufweist, welche so konfiguriert ist, um den Kopf (56) des Bolzens (50) aus dem Zylinder (52) herauszudrücken.

6. Verbindungssystem (100) nach Anspruch 5, wobei die Feder (58) eine Kegelfeder ist.

7. Verbindungssystem (100) nach einem der vorhergehenden Ansprüche, wobei der Zylinder (52) auf einer Seitenoberfläche ein Gewinde (54) aufweist und ein Vorderteil des Bolzens Nuten (55) für den Kopf eines Schraubenziehers aufweist.

8. Möbelstück, welches ein Brett (H) und eine Stütze (V) aufweist und außerdem ein Verbindungssystem (100) nach einem der vorhergehenden Ansprüche zum Verbinden des Bretts (H) mit der Stütze (V) aufweist.

## Revendications

1. Système d'assemblage (100) pour fixer une étagère (H) et un montant (V) d'un meuble ou similaire, le système d'assemblage (100) comprenant un dispositif d'assemblage (10) configuré afin d'être enfoncé dans le bord (H2) de l'étagère (H) et une goupille (50) fixée au montant (V),
dans lequel ladite goupille (50) comprend un cylindre (52) configuré afin d'être inséré dans un trou (V1) du montant (V) et une tête (56) faisant saillie, de manière flexible, dudit cylindre (52) ;
dans lequel ledit dispositif d'assemblage (10) comprend un corps principal (20) au moins partiellement déformable lorsqu'il est en mise en prise avec la tête (56) de la goupille (50) afin de rassembler, de manière flexible, l'étagère (H) et le montant (V) ;
dans lequel le corps principal (20) a deux pivots (30) faisant saillie de la base du corps principal (20),
dans lequel ledit corps principal (20) comprend une goulotte (29) configurée afin de coopérer avec la tête (56) de la goupille (50) lorsque l'étagère (H) doit être décrochée du montant (V),
**caractérisé en ce que** le dispositif d'assemblage (10) est réalisé avec deux pièces qui peuvent être assemblées pour former un corps unique, dans lequel une première pièce (201) comprend ladite goulotte (29) et dans lequel une seconde pièce (202) comprend lesdits deux pivots (30), une surface de mise en prise (26) et une encoche (27).

2. Système d'assemblage (100) selon la revendication 1, dans lequel ladite goulotte (29) comprend une surface inclinée positionnée au niveau d'une extrémité (201) du corps principal (20).

3. Système d'assemblage (100) selon la revendication 2, dans lequel ladite surface inclinée (29) est inclinée à un angle compris entre 45° et 60° par rapport à la surface inférieure (21) dudit corps principal (20).

4. Système d'assemblage (100) selon la revendication 1, dans lequel ladite seconde pièce (202) comprend une languette et ladite première pièce (201) comprend une fente (28) pour ladite languette.

5. Système d'assemblage (100) selon l'une quelconque des revendications précédentes, dans lequel ledit pivot (50) comprend un ressort (58) configuré afin de pousser la tête (56) du pivot (50) à l'extérieur du cylindre (52).

6. Système d'assemblage (100) selon la revendication 5, dans lequel ledit ressort (58) est un ressort conique.

7. Système d'assemblage (100) selon l'une quelconque des revendications précédentes, dans lequel le cylindre (52) comprend un filetage (54) sur sa surface latérale et une partie avant du pivot comprend des encoches (55) pour la tête d'un tournevis.

8. Meuble comprenant une étagère (H) et un montant (V), et comprenant en outre un système d'assemblage (100) selon l'une quelconque des revendications précédentes pour raccorder ladite étagère (H) et ledit montant (V).
